# EUROPEAN PATENT SPECIFICATION

(11) **EP 1 659 809 B1**
(45) Date of publication and mention of the grant of the patent: **24.02.2010**
(21) Application number: 05257068.6
(22) Date of filing: 16.11.2005
(51) Int. Cl.: H04W 8/20

(54) **Wireless communication device and setup method**
Drahtloses Kommunikationsgerät und Einstellungsverfahren
Dispositif de communication sans fil et procédé d'établissement

(30) Priority: 17.11.2004 JP 2004333100
(43) Date of publication of application: 24.05.2006
(73) Proprietor: Brother Kogyo Kabushiki Kaisha, Nagoya-shi, Aichi-ken 467-8561 (JP)
(72) Inventor: Hibino, Masaaki, Technology Planning & IP Dept., Nagoya-shi Aichi-ken 467-8562 (JP)
(74) Representative: Smith, Samuel Leonard

(56) References cited:
- EP-A- 0 891 047
- WO-A-94/09586
- WO-A-98/48522
- US-A1- 2004 137 935

## Description

### Background

### Technical Field

The field relates to a wireless communication adapter that is connected to a certain device and provides the certain device with a wireless communication function.

### Description of Related Art

Wired LANs (local area networks) have been widely used. For building a wired LAN, for example, in an office, users are required to connect cables to various types of devices, such as PCs (personal computers), printing devices, scanners or digital multifunction devices. For the reason of avoiding such troublesome work for the setup of the wired LAN, wireless LANs are sometimes used.

In general, devices (e.g., a PC, a printer, and a digital multifunction device) are provided with a built-in wired LAN communication interface. However, since a wireless communication module is relatively expensive, many devices are not provided with a built-in wireless communication interface. Therefore, wireless communication adapters are used as add-on options.

For building a wireless LAN, a user is required to connect a wireless communication adapter to the user's device and to set up the wireless communication adapter so that the user's device can communicate with other devices (nodes) through the wireless LAN. Frequently, the user is required to set up security-related settings of the wireless communication adapter because there is a possibility that information on a wireless signal leaks from the wireless network. For example, data is encrypted by use of a particular code (an encryption key) so that the data can be exchanged between only devices sharing the particular code. That is, in this case, the user adjusts the settings of the wireless communication adapter to encrypt data using the particular code.

As described above, user operation for setting up a wireless LAN interface tends to be more complicated than that in the case of the wired LAN interface.

In offices, devices, which are not provided with a rich user interface, are frequently used in a wireless communication environment. An example of a device having a relatively poor user interface is a printing device or a digital multifunction device. It is understood that setup work for a wireless communication adapter connected to such a device becomes troublesome work.

US 2004/0137935 A1, describes a modular personal device system in which the system has two parts: a core module and a shell module. The overall functionality available to the combined system is divided between the core module and the shell module, such that a single core module is operable with a plurality of different types of shell modules.

Aspects of the present invention are advantageous in that a wireless communication device which makes it possible to ease setup work required to use a wireless communication function on a predetermined device to which the wireless communication device is connected, is provided.

According to an aspect of the invention, there is provided a wireless communication device comprising:
a radio signal processing unit arranged to transmit and receive radio signals;
a data communication interface to which a device can be detachably connected; and
a controller arranged to:
   control the radio signal processing unit and the data communication interface; and
   operate to set up a wireless communication function of the wireless communication device, **characterized in that** the controller is further arranged to:
      recognise, when the device is connected to the data communication interface, whether the connected device is a storage device or an imaging device in accordance with a descriptor contained in data obtained from the device;
      if the device is recognised as an imaging device, control the wireless communication device so as to use the wireless communication function to (i) pass data, obtained from the imaging device via the data communication interface, to the radio signal processing unit, and (ii) supply data from a wireless signal to the imaging device via the data communication interface; and
      if the device is recognised as a storage device, be able to obtain setting information from the storage device via the data communication interface and set up the wireless communication function of the wireless communication device in accordance with the obtained setting information.

With this configuration, the setting information is obtained by the wireless communication device when the storage device is connected to the wireless communication device, and the setup of wireless communication functions of the wireless communication device is automatically performed. Therefore, a user is not required to manually input the setting information to the predetermined device through use of an operation unit of the predetermined device, by which troublesome operation for the setting of the wireless communication device can be avoided.

Optionally, the controller may receive a signal and judge whether to obtain the setting information from the device, connected to the data communication unit, in accordance with the received signal.

Still optionally, reception of the signal may result from connection of the device to the data communication interface.

Still optionally, the signal may be obtained by the controller via the data communication interface as data.

Still optionally, the signal obtained by the controller may include data defined in a standard, the data representing the type of the device connected to the data communication interface.

Still optionally, the controller may receive a signal and judges whether to control the wireless communication device in the device interface mode in accordance with the received signal.

Still optionally, reception of the signal may result from connection of the device to the data communication interface.

Still optionally, the signal may be obtained by the controller via the data communication interface as data.

Still optionally, the signal obtained by the controller may include data defined in a standard, the data representing the type of the device connected to the data communication interface.

Optionally, the controller may further operates to allow a device, connected to the wireless communication device via the radio signal processing unit, to use a device, which is connected to the data communication interface, through the radio signal processing unit and the data communication interface.

With this configuration, she external device is able to use functions of the predetermined device through the wireless communication device.

Still optionally, the device connected to the data communication interface may include an image recording device having an image recording function. In this case, the controller may operate to receive image data from the device connected to the wireless communication device via the radio signal processing unit and to transmit the received image data to the image recording device via the data communication interface so that the device connected to the wireless communication device via the radio signal processing unit can use the image recording function of the image recording device.

In general, an operation unit of the image recording device (e.g., a printer) is poor. However, if the above mentioned wireless communication device is used, there is no necessity to perform troublesome setting operations for the wireless communication function through use of the operation unit of the image recording device.

Still optionally, the device connected to the data communication interface may include an imaging device having an image data generating function. In this case, the controller may operate to receive image data from the imaging device via the data communication interface and to transmit the received image data to the device connected to the wireless communication device via the radio signal processing unit so that the device connected to the wireless communication device via the radio signal processing unit can use the image data generating function of the imaging device.

If the above mentioned wireless communication device is used for the imaging device having a poor operation unit, there is no necessity to perform troublesome setting operation for the wireless communication function through use of the operation unit of the imaging device.

Still optionally, the controller may further operate to obtain an electronic certificate from a source device of the setting information if the source device is connected to the data communication interface, so that the electronic certificate is used in the wireless communication function.

With this configuration, the electronic certificate is automatically obtained by the communication device from the storage device. Therefore, security communication is also attained.

Still optionally, the controller may further operate to obtain firmware of the wireless communication device from a source device of the setting information if the source device is connected to the data communication interface, so that the wireless communication function can be updated by the obtained firmware.

With this configuration, firmware updates can be attained automatically.

Still optionally, if a source device of the setting information connected to the data communication interface has firmware of the wireless communication device in addition to the setting information, the controller may execute a setting up operation for setting up the wireless communication function using the setting information and a firmware updating operation for updating the wireless communication function by the firmware sequentially in a predetermined order of precedence.

With this configuration, it becomes possible to prevent that trouble arises due to the fact that the setting up operation and the firmware update are performed in random order.

Optionally, the wireless communication device may include a display unit that displays a status of an operation condition of the controller under controller of the controller.

With this configuration, the status of the operation condition of the controller can be securely notified to the user.

In an example, the setting information may include at least one of a parameter representing a communication mode, a parameter representing a network identifier, and a parameter representing an encryption key.

According to another aspect of the invention, there is provided a method of setting up a wireless communication device, comprising a communication interface and a radio signal processing unit characterized by comprising the steps of:
recognising whether a device connected to the data communication interface is a storage device or an imaging device in accordance with a descriptor contained in data obtained from the device;
operating in a wireless communication mode to (i) pass data, obtained from the imaging device via the data communication interface to the radio signal processing unit, and (ii) supply data from a wireless signal to the imaging device via the data communication interface if the device is recognised as an imaging device;
judging, if the device is recognised as a storage device, whether setting information is stored in the storage device, and obtaining, using the communication device, the setting information from the storage device if it is judged in the judging step that the setting information is stored in the storage device; and
setting up the wireless communication function of the wireless communication device using the setting information obtained in the obtaining step.

With this configuration, the setting information is obtained by the wireless communication device when the storage device is connected to the wireless communication device, and the setup up of wireless communication function of the wireless communication device is automatically performed. Therefore, a user is not required to manually inputting the setting information to the predetermined device through use of an operation unit of the predetermined device, by which troublesome operation for the setting of the wireless communication device can be avoided.

The device and method according to the present invention can be realized when appropriate programs are provided and executed by a computer. Such programs may be stored in recording medium such as a flexible disk, CD-ROM, memory cards and the like and distributed. Alternatively or optionally, such programs can be distributed through networks such as the Internet. It is noted that various connections are set forth between elements in the following description. It is noted that these connections in general and, unless specified otherwise, may be direct or indirect and that this specification is not intended to be limiting in this respect.

### Brief Description of the Accompanying Drawings

Fig. 1A shows a block diagram of a wireless communication adapter.
Fig. 1B schematically shows programs stored in a firmware memory of the wireless communication adapter.
Fig. 2A shows a block diagram of a multifunction device to which the wireless communication adapter is connected.
Fig. 2B is an explanatory illustration of data communication of descriptors between the multifunction device and the wireless communication adapter.
Fig. 3A shows a block diagram of a storage device to which the wireless communication adapter is connected.
Fig. 3B is an explanatory illustration of data communication of descriptors between the storage device and the wireless communication adapter.
Fig. 4 shows a block diagram of a personal computer to which the wireless communication adapter is connected.
Fig. 5 is a flowchart illustrating a connection detection event process executed under control of a main control unit of the wireless communication adapter.
Fig. 6A is an explanatory illustration regarding a print server task.
Fig. 6B is an explanatory illustration regarding the scan server task.
Fig. 7 is a flowchart illustrating a storage connection event process.

### Detailed Description of the Embodiments

Hereafter, an aspect according to the invention will be described with reference to the accompanying drawings.

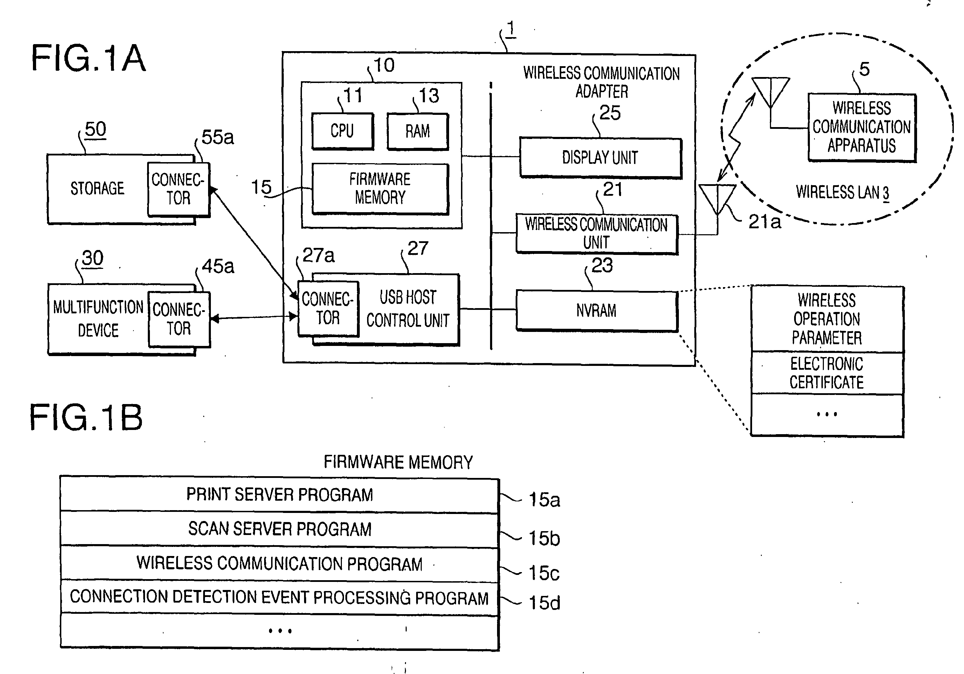

Fig. 1A shows a block diagram of a wireless communication adapter 1 according to an aspect of the invention. In Fig. 1A, a storage device 50, a digital multifunction device (hereafter, simply referred to as a multifunction device) 30 and a wireless communication apparatus 5 are also shown. The wireless communication adapter 1 has a function of operating as a USB (universal serial bus) host device. That is, the wireless communication adapter 1 can be connected to various types of devices (including the storage device 50 and the digital multifunction device 30) via the USB. interface.

As shown in Fig. 1A, the wireless communication adapter 1 includes one or more of the following: a main control unit 10, a wireless communication unit 21, an NVRAM (non-volatile RAM) 23, a display unit 25, and an USB host control unit 27. The main control unit 10 includes a CPU (central processing unit) 11 which executes various types of programs, a RAM 13 used for a work memory for execution of programs, and a firmware memory 15 in which programs functioning as firmware are stored.

Fig. 1B schematically shows the programs stored in the firmware memory 15. In the firmware memory 15, a print server program 15a, a scan server program 15b, a wireless communication program 15c, and a connection detection event processing program 15d are stored. By the execution of the print server program 15a, the wireless communication adapter 1 functions as a print server. By the execution of the scan server program 15b, the wireless communication adapter 1 functions as a scan server. By the execution of the wireless communication program 15c (i.e., a wireless communication task), the wireless communication unit 21 is controlled by the main control unit 10 so that the wireless communication adapter 1 provides a communication function of communicating with external devices in accordance with predetermined protocols via the wireless communication unit 21.

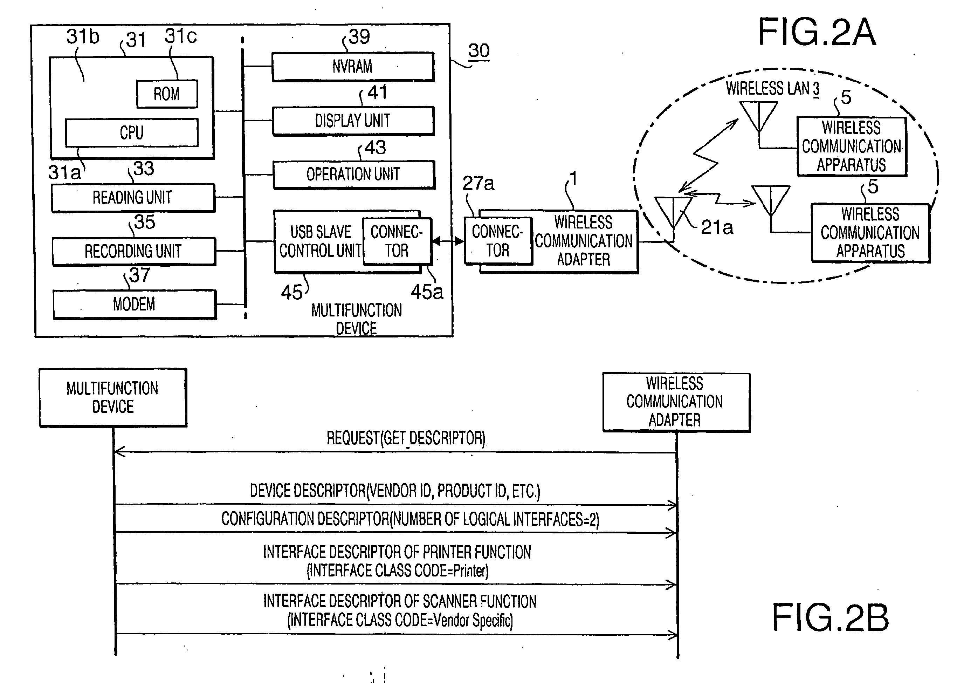

Specifically, the wireless communication unit 21 operates to convert transmission data provided by the main control unit 10 to an RF (radio frequency) signal, and to transmit the RF signal via an antenna 21a to an external device (e.g., the wireless communication apparatus 5) on a wireless LAN (local area network) 3 (see Fig. 2A). The wireless communication unit 21 also operates to receive an RF signal transmitted from the wireless communication apparatus 5 on the wireless LAN 3, to extract data superimposed on the received RF signal, and to send the extracted data to the main control unit 10 as reception data.

In the NVRAM 23, parameters for defining functions of the wireless communication task (including settings of the wireless communication unit 21) are stored. Hereafter, the parameters are referred to as wireless operation parameters. Further, in the NVRAM 23, an electronic certificate used for enhancing security in communication is stored. The wireless operation parameters include a parameter defining a communication mode, a parameter defining a network identifier, a parameter defining an authentication and encryption scheme, and a parameter defining an encryption key.

More specifically, the communication mode includes an infrastructure mode in which communication is performed via an access point, and an ad hoc mode in which communication is performed without using an access pint. For example, ESSID (Extended Service Set Identifier) represented by alphanumeric characters up to 32 characters may be used as the network identifier.

For example, one of open authentication, shared authentication, EAP-TLS (Extensible Authentication Protocol - Transport Layer Security) authentication may be used as the authentication scheme. For example, one of WEP (Wired Equivalent Privacy) and TKIP (Temporal Key Integrity Protocol) may be used as the encryption scheme.

The display unit 25 includes a plurality of LEDs (light emitting diodes). On/Off states and colors of light of the LEDs in the display unit 25 are controlled so as to notify various types of information to a user. The USB host control unit 27 functions as an USB interface having an USB host controller. The USB host controller 27 functioning as a USB host performs serial data communication with an USB device connected to a USB connector 27a to control the USB device.

The USB host control unit 27 is capable of detecting connection of a USB device to the USB connector 27a by automatically sensing a change of voltage on a predetermined wire line in the USB interface. The USB host control unit 27 further has a plug and play function. Based on the plug and play function, the USB host control unit 27a operates, in accordance with a USB program, to obtain a descriptor containing information regarding the USB device (connected to the USB connector 27a) and to automatically adjust settings required for communication with the USB device.

In this embodiment, the multifunction device 30 or the storage device 50 is connected to the USB connector 27a as a USB device. That is, the wireless communication adapter 1 supports both of the multifunction device 30 and the storage device 50.

Fig. 2A shows a block diagram of the multifunction device 30. In Fig. 2A, the multifunction device 30 is connected to the USB connecter 27a of the wireless communication adapter 1. The multifunction device 30 has a scanning function, a printing function, a copying function and a facsimile function.

As shown in Fig. 2A, the multifunction device 30 may include one or more of the following: a main control unit 31, a reading unit 33, a recording unit 35, a modem 37, an NVRAM 39, a display unit 41, an operation unit 43 and an USB slave control unit 45. The main control unit 31 includes a CPU (central processing unit) 31a which executes various types of programs, a ROM 31b storing programs for the above described functions, and a RAM 31c used for a work memory for execution of the programs.

The reading unit 33 reads an image formed on an original and generates image data of the image. The recording unit 35 forms an image on a sheet (recording medium) based on printing data. Specifically, if the main control unit 31 receives a print command from an external device via the USB slave control unit 45, the main control unit 31 controls the reading unit 33 to read an image from an original placed on a platen glass of the reading unit 33 and to transmit image data corresponding to the read image to the external device via the USB slave control unit 45.

The modem 37 is connected to a PSTN (public switched telephone network) so as to enable the multifunction device 30 to transmit/receive facsimile data to/from an external facsimile device connected to the PSTN. The NVRAM 39 stores operation parameters defining operation of the multifunction device 30.

The display unit 41 includes a display that may include an LCD (liquid crystal display) on which various types of information are displayed. The operation unit 43 includes a plurality of keys to be operated by a user. The operation unit 43 is also used to obtain information regarding user operation through use of the keys, and transmits information regarding the user operation to the main control unit 31.

The USB slave control unit 45 includes a USB connector 45a. When the USB connector 27a or one end of a cable (whose other end is connected to the USB connector 27a) is connected to the USB connector 45a, the USB slave control unit 45 operates to receive a request about a descriptor (Get_Descriptor), to generate descriptors representing its own device information, and to transmit the descriptors to the wireless communication adapter 1.

Fig. 2B is an explanatory illustration of data communication of descriptors between the multifunction device 30 and the wireless communication adapter 1. As shown in Fig. 2B, when the USB slave control unit 45 of the multifunction device 30 receives the request about the descriptor from the wireless communication adapter 1, a device descriptor, a configuration descriptor, an interface descriptor, an interface descriptor containing an interface class code (defined as "Printer"), and an interface descriptor containing an interface class code (defined as "Vendor_specific") are transmitted from the multifunction device 30 to the wireless communication adapter 1 under cooperation between the main control unit 31 and the USB slave control unit 45. In this case, the device descriptor includes a vendor ID and a product ID, and the configuration descriptor contains the number of logical interfaces (which is set to 2, for example).

By the data communication of the descriptors, a logical interface for the printing function and a logical interface for the scanning function are established between the wireless communication adapter 1 and the multifunction device 30. Communication regarding the printing function is performed through use of the logical interface for the printing function, while communication regarding the scanning function is performed through use of the logical interface for the scanning function.

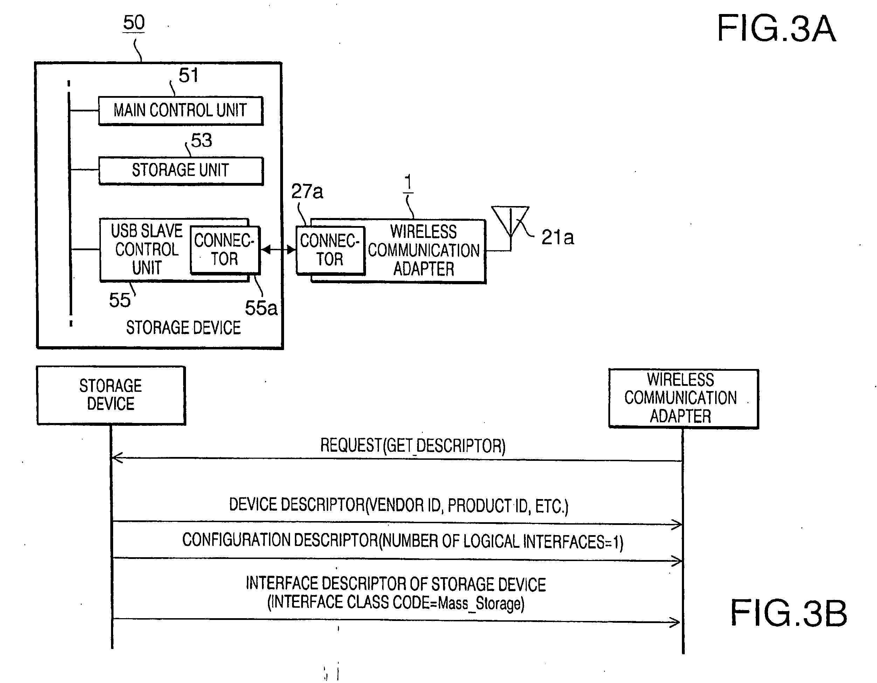

Fig. 3A shows a block diagram of the storage device 50. In Fig. 3A, the storage device 50 is connected to the USB connecter 27a of the wireless communication adapter 1. The storage device 50 includes a main control unit 51 controlling various components in the device 50, a storage unit 53 including a non-volatile memory and a magnetic disk, a USB slave control unit 55 which causes the storage device 50 to operate as a USB slave device.

The USB slave control unit 55 includes a USB connector 55a. When the USB connector 27a or one end of a cable (whose other end is connected to the USB connector 27a) is connected to the USB connector 55a, the USB slave control unit 55 operates to receive a request about a descriptor (Get_Descriptor), to generate descriptors representing its own device information, and to transmit the descriptors to the wireless communication adapter 1.

Fig. 3B is an explanatory illustration of data communication of descriptors between the storage device 50 and the wireless communication adapter 1. As shown in Fig. 3B, when the USB slave control unit 55 of the storage device 30 receives the request about the descriptor from the wireless communication adapter 1, a device descriptor, a configuration descriptor, and an interface descriptor are transmitted from the storage device 50 to the wireless communication adapter 1 under cooperation between the main control unit 51 and the USB slave control unit 55. In this case, the configuration descriptor contains the number of logical interfaces (which is set to 1, for example), and the interface descriptor contains an interface class code (defined as "Mass_Strage").

By the data communication of the descriptors, a logical interface for transmission/reception of data stored in the storage device 50 is established between the wireless communication adapter 1 and the multifunction device 30. After the establishment of the logical interface, the main control unit 51 reads out data stored in the storage unit 53 in accordance with a control signal sent by the wireless communication adapter 1, and transmits the data to the wireless communication adapter 1.

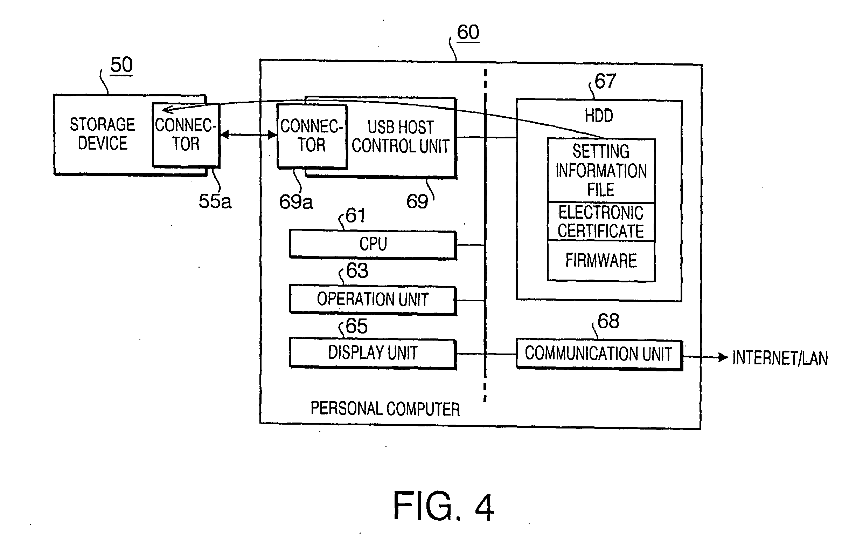

Fig. 4 shows a block diagram of a PC (personal computer) 60. As shown in Fig. 4, the storage device 50 is configured to be connected to a USB connector 69a of the PC 60. When the storage device 50 is connected to the USB connector 69a of the PC 60, the storage device 50 adjusts its own settings so that descriptors can be sent to the PC 60 in accordance with a request about a descriptor sent by the PC 60 and that data sent by the PC 60 can be stored in the storage unit 53. The descriptors transmitted from the storage device 50 to the PC 60 include a device descriptor and an interface descriptor containing an interface class code (defined as "Mass_Strage").

As described in detail later, setting information regarding the wireless operation parameters for the wireless communication adapter 1, an electronic certificate (which is required in the case of security communication), and firmware for the wireless communication adapter 1 are transmitted from the PC 60 to the storage device 50. By this configuration, applying the setting of the wireless communication parameters to the wireless communication adapter 1, import of the electronic certificate into wireless communication adapter 1, update of the firmware for the wireless communication adapter 1 can be attained.

As shown in Fig. 4, the PC 60 includes a CPU 61 which executes various types of programs, an operation unit 63 including a keyboard and a pointing device, a display unit 65 (including, for example, a liquid crystal display), an HDD (hard disk drive) 67, a communication unit 68 for connecting the PC 60 to a network (e.g., the Internet) and a USB host control unit 69.

In the HDD 67, a program for defining settings of the wireless communication adapter 1 is stored. By executing the program, the CPU 61 displays a setting screen on the display unit 65 so as to obtain the wireless operation parameters to be applied to the wireless communication adapter 1 from the user and to generate a setting information file defining values of the wireless operation parameters. The generated setting information file is stored in the HDD 67.

If a transmission command is inputted to the PC 60 by the user through use of the operation unit 63 in a situation where the storage device 50 is connected to the PC 60 via the USB connector 69a, the PC 60 controls the storage device 50 to transmit the setting information file in the HDD 67 to the storage unit 53 of the storage device 50.

If an acquisition command of an electronic certificate is inputted to the PC 60 by the user through use of the operation unit 63, the PC 60 operates to obtain an electronic certificate from an external authentication station via the communication unit 68 and to store the obtained electronic certificate into the HDD 67. If a transfer command of an electronic certificate is inputted to the PC 60 by the user through use of the operation unit 63, the PC 60 controls the storage device 50 so as to write the electronic certificate stored in the HDD 67 into the storage unit 53 of the storage device 50.

If an acquisition command of firmware is inputted to the PC 60 by the user through use of the operation unit 63, the PC 60 operates to obtain firmware of the wireless communication adapter 1 from an external server via the communication unit 68, and to store the firmware into HDD 67. If a transfer command of firmware is inputted to the PC 60 by the user through use of the operation unit 63, the PC 60 controls the storage device 50 so as to write the firmware stored in the HDD 67 into the storage unit 53 of the storage device 50.

Consequently, the setting information file defining the wireless operation parameters to be applied to the wireless communication adapter 1, the electronic certificate used in security communication, and firmware for update are stored in the storage unit 53 of the storage device 50.

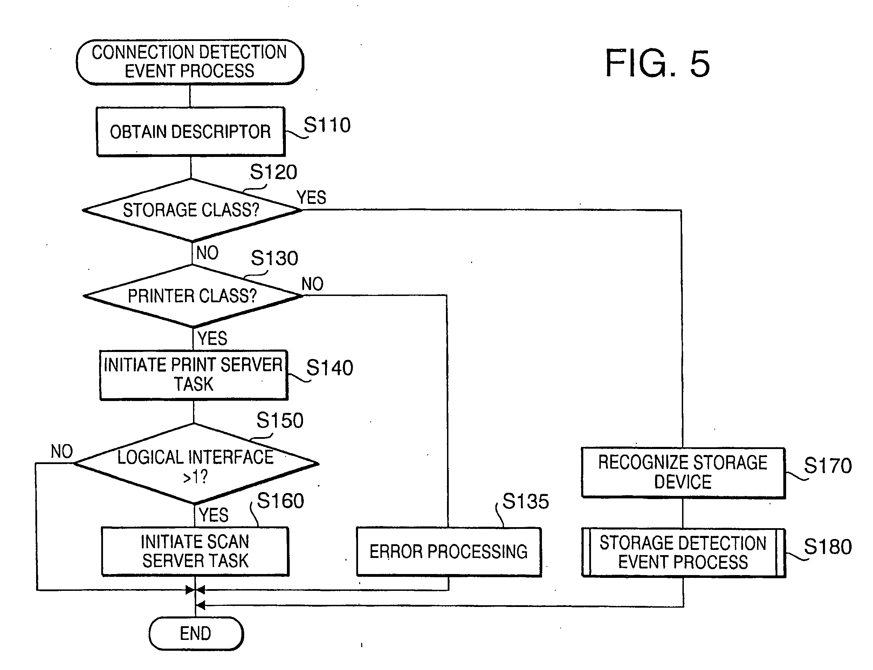

Hereafter, a connection detection event process (i.e., a connection detection event processing program 15d) which is performed by the main control unit 10 (i.e., the CPU 11) will be explained in detail with reference to Fig. 5. The connection detection event process is initiated when connection of a USB device to the USB connector 27a is detected by the CPU 11, for example, when an interrupt request signal is inputted to the CPU 11.

First, the main control unit 10 controls the USB host control unit 27 to transmit a request about a descriptor (GET_Descriptor) to the USB device being connected to the USB connector 27a. Then, the main control unit 10 obtains descriptors including the device descriptor, the configuration descriptor, and the interface descriptor from the USB device (step S110). The descriptors are sent by the USB device as a response to the request.

Next, in step S120, the main control unit 10 judges whether or not the USB device being connected to the USB connector 27a is a storage class based on the descriptors obtained in step S110. More specifically, in step S120, the main control unit 10 judges whether or not the interface class code in the interface descriptor is "Mass_Strage".

If the main control unit 10 did not receive the interface descriptor containing the interface class code defined as "Mass_Strage" (S120:NO), control proceeds to step S130. That is, in this case the main control unit 10 judges that the USB device is not a device of a storage class.

If the main control unit 10 received the interface descriptor containing the interface class code defined as "Mass_Strage" (S120:YES), control proceeds to step S 170. That is, in this case the main control unit 10 judges that the USB device is a device of a storage class.

In step S130, the main control unit 10 judges whether or not the USB device connected to the USB connector 27a is a device of a printer class based on the descriptors obtained in step S 110 (S 130). Specifically, the man control unit 10 judges whether the interface class code contained in the received interface descriptor is "Printer". If the interface class code is not "Printer" (S130:NO), control proceeds to step S135. That is, in this case the main control unit 10 judges that the USB device connected to the USB connector 27a is not a device of a printer class.

If the interface class code is "Printer" (S130:YES), control proceeds to step S 140. That is, in this case the main control unit 10 judges that the USB device connected to the USB connector 27a is a device of a printer class.

In step S 135, an error process for notifying the user of an occurrence of an error is executed through use of the display unit 25. More specifically, in step S135, the LEDs of the display unit 25 are controlled so that predetermined color light (e.g., red light) is turned to ON to indicate the occurrence of an error. Then, the connection detection event process terminates.

In step S 140, the main control unit 10 initiates a print server task by executing the print server program 15a. By the execution of the print server task, the wireless communication adapter 1 enables the wireless communication apparatus 5 to use the printing function implemented in the USB device (i.e., the multifunction device 30) connected to the USB connector 27a.

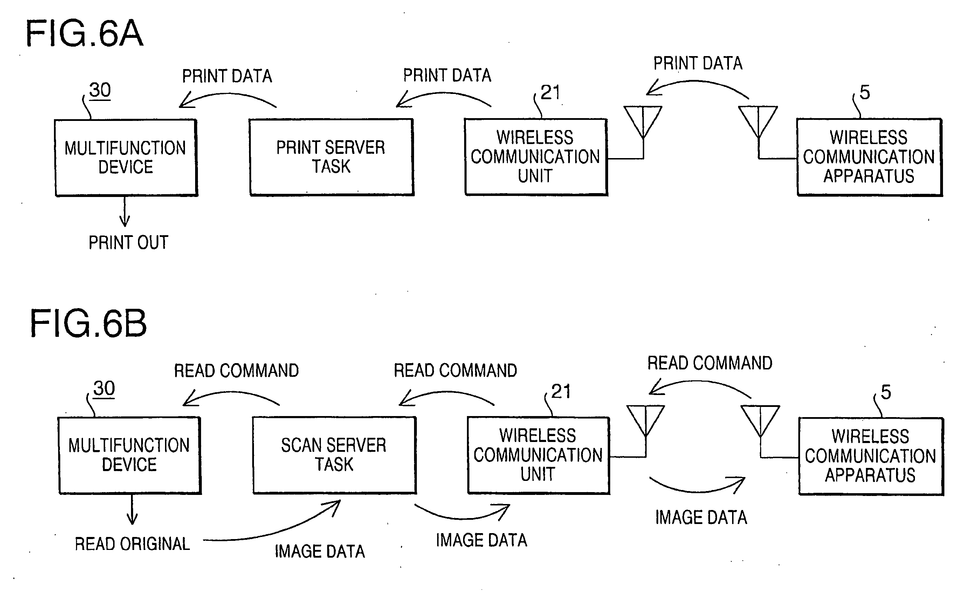

Fig. 6A is an explanatory illustration regarding the print server task. As shown in Fig. 6A, the wireless communication unit 21 of the adapter 1 receives a radio signal, on which a print command and printing data are superimposed, from the wireless communication apparatus 5. Then, the print server task running on the adapter 1 receives the print command and the print data from the wireless communication unit 21. Then, the print server task sends the print data to the multifunction device 30 via the USB host control unit 27 so as to cause the multifunction device 30 to print an image (corresponding to the print data) on a sheet.

After the step S 140 is finished, control proceeds to step S 150 where the main control unit 10 judges whether the number of logical interfaces, that the USB device connected to the USB connector 27a has, is larger than 1. If the number of logical interfaces is larger than 1 (S150:YES), control proceeds to step S160 where the scan server program is executed to initiate a scan server task. The scan server program enables the wireless communication apparatus 5 to use the scanner function implemented in the multifunction device 30.

Fig. 6B is an explanatory illustration regarding the scan server task. As shown in Fig. 6B, the wireless communication unit 21 of the adapter 1 receives a radio signal, on which a reading command is superimposed, from the wireless communication apparatus 5. Then, the scan server task running on the adapter 1 receives the reading command from the wireless communication unit 21. Then, the scan server task sends the reading command to the multifunction device 30 via the USB host control unit 27 so as to cause the multifunction device 30 to read an image formed on an original placed on a platen glass using an imaging device (e.g., a CCD) and to generate image data corresponding to the obtained image.

Then, the scan server task receives the image data from the multifunction device 30, and transmits the image data to the wireless communication apparatus 5 via the wireless communication unit 21.

As an alternative to the above mentioned operation of the scan server task, the scan server task may operate as follows. That is, if the multifunction device 30 (USB device) receives a read and transmission command via the operation unit 43 from the user, the scan server task receives the read and transmission command and image data from the multifunction device 30 via the USB host control unit 27. Then, the scan server task transmits the image data to the wireless communication apparatus 5 via the wireless communication unit 21. After the step S160 is finished, the connection detection event process terminates.

In step S 170, the main control unit 10 recognizes the storage device 50 connected to the USB connector 27a. Then, the main control unit 10 executes a storage connection event process in step S 180.

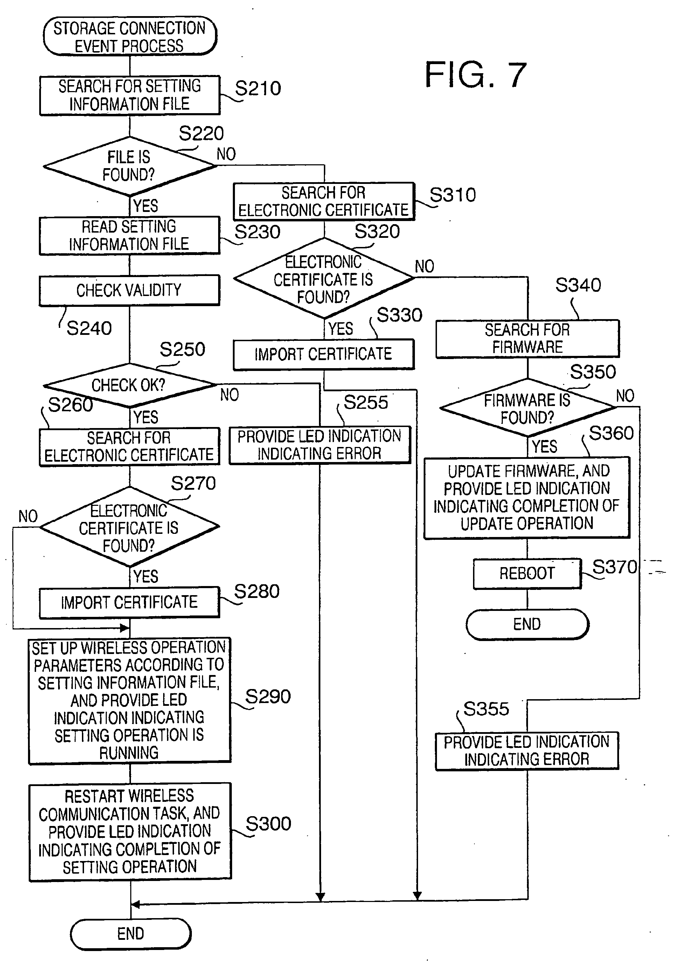

Fig. 7 is a flowchart illustrating the storage connection event process. First, the main control unit 10 searches a plurality of items of data stored in the storage unit 53 of the storage device 50 for the setting information file (S210). Specifically, the main control unit 10 searches for a file having a predetermined file name as a setting information file. Next, in step S220, the main control unit judges whether the setting information file is stored in the storage unit 53.

If it is judged that the setting information file is stored in the storage unit 53 (S220:YES), the main control unit 10 controls the storage device 50 through the USB host control unit 27 to read out the setting information file from the storage unit 53 of the storage device 50 (S230). Then, in step S240 the main control unit 10 checks validity of the setting information file obtained in step S230. Specifically, in step S240 the main control unit 10 checks whether a description of the setting information file matches a predetermined format.

Next, in step S250 the main control unit 10 judges whether the setting information has a problem regarding the validity. If the setting information file has a problem regarding the validity (S250:NO), the main control unit 10 displays error information through the display unit 25 (S255). Specifically, in step S255, the LEDs of the display unit 25 are controlled so that the predetermined color light (e.g., green light) blinks to indicate the occurrence of an error. Then, the storage connection event process terminates.

If the setting information file has no problem regarding the validity (S250:YES), the main control unit 10 searches the plurality of items of data stored in the storage unit 53 of the storage device 50 for the electronic certificate (S260). Then, the main control unit 10 judges whether the electronic certificate is stored in the storage unit 53 (S270)

If the electronic certificate is stored in the storage unit 53 (S270:YES), the main control unit 10 controls the storage device 50 via the USB host control unit 27 to read out the electronic certificate from the storage unit 53 of the storage device 50. Then, the main control unit 10 stores the electronic certificate into a storing area for an electronic certificate of the NVRAN 23 (S280). Then, control proceeds to step S290.

If it is judged in step S270 that the electronic certificate is not stored in the storage unit 53 (S270:NO), control proceeds to step S290 without executing the step S280.

In step S290, the main control unit 10 updates the wireless operation parameters in the NVRAM 23 in accordance with the setting information file obtained in step S230, so that the settings of wireless communication is completed. During setting operation in step S290, the main control unit 10 displays information indicating that the wireless communication adapter 1 is in a state of setting operation. Specifically, the LEDs of the display unit 25 are controlled so that predetermined color light (e.g. green light) is turned on to indicate the execution of the setting operation.

Next, the main control unit 10 operates to restart the wireless communication task, which has been started at a time of power ON of the wireless communication adapter 1, so as to apply the wireless communication parameters to the operation of the wireless communication task. After the restart of the wireless communication task, the main control unit 10 displays information indicating completion of the setting operation through the display unit 25 (S300). Then, the storage connection event process terminates.

If it is judged in step S220 that the setting information file is not stored in the storage unit 53 of the storage device 50 (S220:NO), the main control unit 10 controls the storage device 50 through the USB host control device 27 so as to search the plurality of items of data in the storage unit 53 for the electronic certificate (S310). Then, the main control unit 10 judges whether the electronic certificate is stored in the storage unit 53 (S320).

If the electronic certificate is stored in the storage unit 53 (S320:YES), the main control unit 10 controls the storage device 50 through the USB host control device 27 so as to read out the electronic certificate from the storage unit 53 and to write the electronic certificate into an electronic certificate storing area (which is consulted during communication process) of the NVRAN 23 (S330). Then, the storage connection event process terminates.

If the electronic certificate is not stored in the storage unit 53 (S320:NO), control proceeds to step S340. In step S340, the main control unit 10 controls the storage device 50 through the USB host control device 27 so as to search the plurality of items of data in the storage unit 53 for the firmware of the wireless communication adapter 1. Then, the main control unit 10 judges whether the firmware of the wireless communication adapter 1 is stored in the storage unit 53 (S350).

If the firmware is stored in the storage unit 53 (S350:YES), control proceeds to step S360. In step S360, the main control unit 10 reads out the firmware from the storage unit 53 through the USB host control unit 27, and updates firmware in the firmware memory 15 using the obtained firmware. After the firmware update is finished, the main control unit 10 displays information indicating the completion of firmware update through the display unit 25. Then, the main control unit 10 reboots the wireless communication adapter 1.

If the firmware is not stored in the storage unit 53 (S350: NO), the main control unit 10 displays error information through the display unit 25 (S355). Then, the storage connection event process terminates.

Referring now to Fig. 5, after the storage connection event process of step S 180 is finished, the connection detection event process terminates.

As described above, according to the embodiment, if the connection of the storage device 50 to the USB interface (USB host control unit 27) of the wireless communication adapter 1 is detected, the wireless communication adapter 1 obtains the setting information file from the storage device 50 and thereafter the wireless operation parameters in the NVRAN 23 are updated. With this configuration, a wireless communication system implemented by the wireless communication task and the wireless communication unit 21 operates in accordance with the setting information file.

According to the embodiment, the setting information file is read out by the wireless communication adapter 1 when the storage device 50 is connected to the wireless communication adapter 1, and the setting operation for wireless communication is automatically performed. Therefore, the user is not required to manually inputting the setting information to the multifunction device 30 through use of the operation unit 43, by which troublesome operation for the setting of the wireless communication can be avoided.

For example, the wireless communication adapter 1 executes the print server task if the data received by the wireless communication unit 21 is the print data so that the print data is sent to the multifunction device 30. Such a configuration allows the user to cause the wireless communication adapter 1 to operate as the print server by simply connecting the wireless communication adapter 1 to the USB connector 45a of the multifunction device 30.

In this embodiment, the wireless communication adapter 1 employs a standard interface (i.e., the USB interface) for the connection of an external device. Therefore, in addition to the multifunction device 30, the storage device 50 can also be connected to the wireless communication adapter 1 via the standard interface. A dedicated interface only for the storage device is not required. Accordingly, the const reduction of the wireless communication adapter 1 is attained. Also, the setting of the wireless communication adapter 1 is eased.

In order to directly adjust the settings of the wireless communication adapter 1 using the PC 60, it is necessary that the wireless communication adapter 1 is provided with a USB slave control unit to be connected to the USB host control unit 69 of the PC 60. However, according to the embodiment, the setting operation for setting up the wireless communication adapter 1 is attained without requiring the wireless communication adapter 1 to have a USB slave control unit. Therefore, usability regarding the setting of wireless communication is enhanced.

By using a single storage device 50 (in which setting information has been stored), the same settings can be applied to a plurality of wireless communication adapters. Therefore, according to the embodiment, setting operation for a plurality of wireless communication adapters in a large-scale network system is eased.

In this embodiment, the USB interface having a plug-and-play function is used. Therefore, it is not necessary for the user to perform troublesome operation to the wireless communication adapter 1 to read out the setting information file from the storage device 50. The setting operation regarding wireless communication is eased.

In this embodiment, the wireless communication adapter 1 provides the above mentioned advantage for the multifunction device 30 having the operation unit 43 whose operability is poor. Therefore, the troublesome work for the setting of the wireless communication adapter 1 due to the poor operability of the operation unit 43 can be avoided. In particular, since a plurality of setting items including the network identifier, the encryption key, and the authentication and encryption schemes are required for the setting of the wireless communication adapter 1, the configuration of the embodiment is very convenient.

In this embodiment, a status of the setting of the wireless operation parameters is notified to the user through LED indication of the display unit 25, and the occurrence of an error is also notified to the user through the LED indication. Such a configuration allows the user to easily know whether the setting operation has been successfully completed.

Since if the electronic certificate is stored in the storage device 50, the electronic certificate is automatically read out from the storage device 50 and is stored in the wireless-communication adapter 1, the security communication using the electronic certification can be attained by simply connecting the storage device 50 to the wireless communication adapter 1.

In this embodiment, if the firmware of the wireless communication adapter 1 is stored in the storage device 50, the firmware is automatically read out form the storage device 50 and firmware in the wireless communication adapter 1 is updated. Therefore, according to the embodiment, update of the firmware can also be attained by simply connecting the storage device 50 to the wireless communication adapter 1, by which the usability is enhanced.

In this embodiment, if both of the setting information file and the firmware are stored in the storage device 50, the setting regarding the setting information file is given priority to the setting regarding the firmware. Therefore, the occurrence of an error due to the fact that the order of the setting of the setting information file and the firmware update is inconsecutive can be avoided.

Although the present invention has been described in considerable detail with reference to certain preferred embodiments thereof, other embodiments are possible.

For example, although in the above mentioned embodiment of the invention is applied to the wireless communication adapter which communicates with an external wireless communication apparatus in a wireless network, the present invention may be applied to a adapter for infrared light communication, an adapter for Bluetooth based communication, or an adapter for UWB (ultra wide band) based communication.

As an alternative to the USB interface, another interface such as a IEEE 1394 standard interface may be adopted for the data communication between the wireless communication adapter 1 and another device (e.g., the multifunction device 30 or the storage device).

## Claims

1. A wireless communication device (1) comprising:
a radio signal processing unit (21) arranged to transmit and receive radio signals;
a data communication interface (27) to which a device (30/50) can be detachably connected; and
a controller (10) arranged to:
control the radio signal processing unit (21) and the data communication interface (27); and
operate to set up a wireless communication function of the wireless communication device (1), **characterized in that** the controller (10) is further arranged to:
recognise, when the device (30/50) is connected to the data communication interface (27), whether the connected device is a storage device (50) or an imaging device (30) in accordance with a descriptor contained in data obtained from the device (30/50);
if the device is recognised as an imaging device (30), control the wireless communication device (1) so as to use the wireless communication function to (i) pass data, obtained from the imaging device (30) via the data communication interface (27), to the radio signal processing unit (21), and (ii) supply data from a wireless signal to the imaging device (30) via the data communication interface (27); and
if the device is recognised as a storage device (50), be able to obtain setting information from the storage device (50) via the data communication interface (27) and set up the wireless communication function of the wireless communication device (1) in accordance with the obtained setting information.

2. The wireless communication device (1) according to claim 1, wherein the controller (10) is further arranged to use the obtained setting information in order to set up wireless operation parameters of the wireless communication device (1).

3. The wireless communication device (1) according to claim 1 or claim 2, wherein the controller (10) is arranged to recognise the type of device (30/50) connected to the data communication interface (27) as an imaging device (30) if the device (30/50) is a multifunctional device and/or a printer and/or a scanner.

4. The wireless communication device (1) according to claim 1, wherein the controller (10) is arranged to receive a signal and judge whether to obtain the setting information from the storage device (50), when connected to the data communication device (1), in accordance with the received signal.

5. The wireless communication device according to claim 4, wherein reception of the signal results from connection of the storage device (50) to the data communication interface (27).

6. The wireless communication device according to claim 4 or 5, wherein the signal is obtained by the controller (10) via the data communication interface (27) as data.

7. The wireless communication device according to any of claims 4 to 6, wherein the signal obtained by the controller (10) includes data representing the type of the device (30/50) connected to the data communication interface (27).

8. The wireless communication device according to claim 1, wherein the controller (10) is arranged to receive a signal and judge whether to use the wireless communication function of the wireless communication device (1) in accordance with the received signal.

9. The wireless communication device according to claim 8, wherein reception of the signal results from connection of the imaging device (30) to the data communication interface (27).

10. The wireless communication device according to claim 8 or 9, wherein the signal is obtained by the controller (10) via the data communication interface (27) as data.

11. The wireless communication device according to any of claims 8 to 10, wherein the signal obtained by the controller (10) includes data representing the type of the device (30/50) connected to the data communication interface (27).

12. The wireless communication device according to claim 1, wherein the controller (10) further operates to allow a device (5), connected to the wireless communication device (1) via the radio signal processing unit (21), to use an imaging device (30), when it is connected to the data communication interface (27), through the radio signal processing unit (21) and the data communication interface.

13. The wireless communication device (1) according to claim 12, wherein:
the imaging device (30) that can be detachably connected to the data communication interface (27) includes an image recording device having an image recording function; and
the controller (10) is further arranged to receive image data from the device (5) connected to the wireless communication device (1) via the radio signal processing unit (21) and to transmit the received image data to the image recording device via the data communication interface (27) so that the device (5) connected to the wireless communication device (1) via the radio signal processing unit (21) can use the image recording function of the image recording device.

14. The wireless communication device (1) according to claim 12, wherein:
the imaging device (30) that can be detachably connected to the data communication interface (27) includes an imaging device having an image data generating function; and
the controller (10) operates to receive image data from the imaging device via the data communication interface (27) and to transmit the received image data to the device (5) connected to the wireless communication device via the radio signal processing unit (21) so that the device (5) connected to the wireless communication device (1) via the radio signal processing unit (21) can use the image data generating function of the imaging device.

15. The wireless communication device (1) according to any of claims 1 to 14, wherein the controller (10) is further arranged to obtain an electronic certificate from the storage device (50) containing the setting information if storage device (50) is connected to the data communication interface (27), so that the electronic certificate is used in the wireless communication function.

16. The wireless communication device (1) according to any of claims 1 to 15, wherein the controller (10) is further arranged to obtain firmware of the wireless communication device (1) from the storage device (50) containing the setting information if the storage device (50) is connected to the data communication interface (27), so that the wireless communication function can be updated by the obtained firmware.

17. The wireless communication device according to any of claims 1 to 16, wherein if the storage device (50) containing the setting information is connected to the data communication interface (27) and has firmware of the wireless communication device (1) in addition to the setting information, the controller (10) is further configured to execute a firmware updating operation for updating the wireless communication function by the firmware sequentially in a predetermined order of precedence.

18. The wireless communication device according to any of claims 1 to 17, further comprising a display unit (25) that displays a status of an operation condition of the controller (10) under control of the controller (10).

19. The wireless communication device according to any of claims 1 to 18, wherein the setting information includes at least one of a parameter representing a communication mode, a parameter representing a network identifier, and a parameter representing an encryption key.

20. A method of setting up a wireless communication device (1), comprising a communication interface (27) and a radio signal processing unit (21) **characterized by** comprising the steps of:
recognising whether a device connected to the data communication interface (37) is a storage device (50) or an imaging device (30) in accordance with a descriptor contained in data obtained from the device (30);
operating in a wireless communication mode to (i) pass data, obtained from the imaging device (30) via the data communication interface (27) to the radio signal processing unit (21), and (ii) supply data from a wireless signal to the imaging device (30) via the data communication interface (27) if the device is recognised as an imaging device (30);
judging, if the device is recognised as a storage device (50), whether setting information is stored in the storage device (50), and obtaining, using the communication device (1), the setting information from the storage device (50) if it is judged in the judging step that the setting information is stored in the storage device (50); and
setting up the wireless communication function of the wireless communication device (1) using the setting information obtained in the obtaining step.

21. A computer-readable medium having a program stored thereon that, when loaded on a computer and executed, cause the computer to function as a wireless communication device, and to carry out the method of claim 20 of setting up the wireless communication device.

22. A system for setting up a wireless communication device (1), comprising a communication interface (27), and a radio signal processing unit (21), **characterised by** comprising:
means (10) for recognising whether a device connected to the data communication interface (27) is a storage device (50) or an imaging device (30) in accordance with a descriptor contained in data obtained from the imaging device (30);
means for operating in a wireless communication mode to (i) pass data, obtained from the imaging device (30) via the data communication interface (27), to the radio signal processing unit (21), and (ii) supply data from a wireless signal to the imaging device (30) via the data communication interface (27) if the device is recognized as an imaging device (30);
means (10) for judging, if the device is recognized as a storage device (50), whether setting information is stored in the storage device (50) and for obtaining the setting information from the storage device (50) if it is judged by the judging means that the setting information is stored in the storage device (50); and
means (10) for setting up the wireless communication function of the wireless communication device (1) using the setting information obtained in the obtaining means.

## Patentansprüche

1. Drahtlose Kommunikationsvorrichtung (1) mit:
einer Radiosignalverarbeitungseinheit (21), die zum Senden und Empfangen von Radiosignalen angeordnet ist;
einer Datenkommunikationsschnittstelle (27), mit der eine Vorrichtung (30/50) lösbar verbunden werden kann; und
einer Steuerung (10), die angeordnet ist zum:
Steuern der Radiosignalverarbeitung (21) und der Datenkommunikationsschnittstelle (27); und
Tätigsein zum Einstellen der drahtlosen Kommunikationsfunktionsvorrichtung (1),
**dadurch gekennzeichnet,**
**dass** die Steuerung (10) weiter angeordnet ist zum:
Erkennen, wenn die Vorrichtung mit der Datenkommunikationsschnittstelle (27) verbunden ist, ob die verbundene Vorrichtung eine Speichervorrichtung (50) oder eine Bildvorrichtung (30) ist gemäß einer Beschreibung, die in Daten enthalten ist, die von der Vorrichtung (30/50) erhalten sind;
wenn die Vorrichtung als eine Bildvorrichtung (30) erkannt ist, Steuern der drahtlosen Kommunikationsvorrichtung (1) so, dass die drahtlose Kommunikationsvorrichtung benutzt wird zum:
(i) Durchlassen von Daten, die von der Bildvorrichtung (30) über die Datenkommunikationsschnittstelle (27) erhalten sind, zu der Radiosignalverarbeitungseinheit (21) und
(ii) Liefern von Daten von einem drahtlosen Signal zu der Bildvorrichtung (30) über die Datenkommunikationsschnittstelle (27); und
wenn die Vorrichtung als eine Speichervorrichtung (50) erkannt ist, in der Lage sein, Einstellinformation von der Speichervorrichtung (50) über die Datenkommunikationsschnittstelle (27) zu erhalten und die drahtlose Kommunikationsfunktion der drahtlosen Kommunikationsvorrichtung (1) gemäß der erhaltenen Einstellfunktion einzustellen.

2. Drahtlose Kommunikationsvorrichtung (1) nach Anspruch 1, bei der die Steuerung (10) weiter angeordnet ist zum Benutzen der erhaltenen Einstellinformation zum Einstellen der drahtlosen Betriebsparameter der drahtlosen Kommunikationsvorrichtung (1).

3. Drahtlose Kommunikationsvorrichtung (1) nach Anspruch 1 oder 2, bei der die Steuerung (10) angeordnet ist zum Erkennen der Art der Vorrichtung (30/50), die mit der Datenkommunikationsschnittstelle (27) verbunden ist, als eine Bildvorrichtung (30), wenn die Vorrichtung (30/50) eine Multifunktionsvorrichtung und/oder ein Drucker und/oder ein Scanner ist.

4. Drahtlose Kommunikationsvorrichtung (1) nach Anspruch 1, bei der die Steuerung (10) angeordnet ist zum Empfangen eines Signals und zum Beurteilen, ob die Einstellinformation von der Speichervorrichtung (50) zu erhalten ist, wenn sie mit der Datenkommunikationsvorrichtung (1) verbunden ist, gemäß dem empfangenen Signal.

5. Drahtlose Kommunikationsvorrichtung nach Anspruch 4, bei der Empfang des Resultates von der Verbindung der Speichervorrichtung (50) mit der Datenkommunikationsschnittstelle (27) resultiert.

6. Drahtlose Kommunikationsvorrichtung nach Anspruch 4 oder 5, bei der das Signal durch die Steuerung (10) über die Datenkommunikationsschnittstelle (27) als Daten erhalten sind.

7. Drahtlose Kommunikationsvorrichtung nach einem der Ansprüche 4 bis 6, bei der das von der Steuerung (10) erhaltene Signal Daten enthält, die die Art der Vorrichtung (30/50) darstellen, die mit der Datenkommunikationsschnittstelle (27) verbunden ist.

8. Drahtlose Kommunikationsvorrichtung nach Anspruch 1, bei der die Steuerung (10) angeordnet ist zum Empfangen eines Signals und zum Beurteilen, ob die drahtlose Kommunikationsfunktion der drahtlosen Kommunikationsvorrichtung (1) zu benutzen ist, gemäß dem empfangenen Signal.

9. Drahtlose Kommunikationsvorrichtung nach Anspruch 8, bei der Empfang des Signals von der Verbindung der Bildvorrichtung (30) mit der Datenkommunikationsschnittstelle (27) resultiert.

10. Drahtlose Kommunikationsvorrichtung nach Anspruch 8 oder 9, bei der das Signal von der Steuerung über die Datenkommunikationsschnittstelle (27) als Daten erhalten ist.

11. Drahtlose Kommunikationsvorrichtung nach einem der Ansprüche 8 bis 10, bei der das durch die Steuerung (10) erhaltene Signal Daten enthält, die die Art der Vorrichtung (30/50) darstellen, die mit der Datenkommunikationsschnittstelle (27) verbunden ist.

12. Drahtlose Kommunikationsvorrichtung nach Anspruch 1, bei der die Steuerung (10) weiter tätig ist zum Ermöglichen einer Vorrichtung (5), die mit der drahtlosen Kommunikationsvorrichtung (1) über die Radiosignalverarbeitungseinheit (21) verbunden ist, eine Bildvorrichtung (30) zu benutzen, wenn sie mit der Datenkommunikationsschnittstelle (27) durch die Radiosignalverarbeitungseinheit (21) und die Datenkommunikationsschnittstelle verbunden ist.

13. Drahtlose Kommunikationsvorrichtung (1) nach Anspruch 12, bei der:
die Bildvorrichtung (30), die lösbar mit der Datenkommunikationsschnittstelle (27) verbunden ist, eine Bildaufzeichnungsvorrichtung mit einer Bildaufzeichnungsfunktion enthält; und
die Steuerung weiter angeordnet ist zum Empfangen von Bilddaten von der Vorrichtung (5), die mit der drahtlosen Kommunikationsvorrichtung (1) über die Radiosignalverarbeitungseinheit (21) verbunden ist, und zum Senden der empfangenen Bilddaten zu der Bildaufzeichnungsvorrichtung über die Datenkommunikationsschnittstelle (27), so dass die mit der drahtlosen Kommunikationsvorrichtung (1) über die Radiosignalverarbeitung (21) verbundene Vorrichtung (5) die Bildaufzeichnungsfunktion der Bildaufzeichnungsvorrichtung benutzen kann.

14. Drahtlose Kommunikationsvorrichtung (1) nach Anspruch 12, bei der:
die Bildvorrichtung (30), die lösbar mit der Datenkommunikationsschnittstelle (27) verbunden sein kann, eine Bildvorrichtung mit einer Bilddatenerzeugungsfunktion enthält; und
die Steuerung (10) tätig ist zum Empfangen von Bilddaten von der Bildvorrichtung über die Datenkommunikationsschnittstelle (27) und zum Senden der empfangenen Bilddaten zu der mit der drahtlosen Kommunikationsvorrichtung über die Radiosignalverarbeitungseinheit (21) verbundene Vorrichtung (5), so dass die mit der drahtlosen Kommunikationsvorrichtung (1) über die Radiosignalverarbeitungseinheit (21) verbundene Vorrichtung (5) die Bilddatenerzeugungsfunktion der Bildvorrichtung benutzen kann.

15. Drahtlose Kommunikationsvorrichtung (1) nach einem der Ansprüche 1 bis 14, bei der die Steuerung (10) weiter angeordnet ist zum Erhalten eines elektronischen Zertifikates von der Speichervorrichtung (50), die die Einstellinformation enthält, wenn die Speichervorrichtung (50) mit der Datenkommunikationsschnittstelle (27) verbunden ist, so dass das elektronische Zertifikat in der drahtlosen Kommunikationsfunktion benutzt wird.

16. Drahtlose Kommunikationsvorrichtung (1) nach einem der Ansprüche 1 bis 15, bei der die Steuerung (10) weiter angeordnet ist zum Erhalten von Firmware der drahtlosen Kommunikationsvorrichtung (1) von der Speichervorrichtung (50), die die Einstellinformation enthält, wenn die Speichervorrichtung (50) mit der Datenkommunikationsschnittstelle (27) verbunden ist, so dass die drahtlose Kommunikationsfunktion durch die erhaltene Firmware aktualisiert werden kann.

17. Drahtlose Kommunikationsvorrichtung nach einem der Ansprüche 1 bis 16, bei der, wenn die Speichervorrichtung (50), die die Einstellinformation enthält, mit der Datenkommunikationsschnittstelle (27) verbunden ist und Firmware der drahtlosen Kommunikationsvorrichtung (1) zusätzlich zu der Einstellinformation aufweist, die Steuerung (10) weiter aufgebaut ist zum Ausführen einer Firmware-Aktualisierungstätigkeit zum Aktualisieren der drahtlosen Kommunikationsfunktion durch die Firmware sequentiell in einer vorgeschriebenen Reihenfolge des Vorranges.

18. Drahtlose Kommunikationsvorrichtung nach einem der Ansprüche 1 bis 17, weiter mit einer Anzeigeneinheit (25), die einen Status einer Betriebsbedingung der Steuerung (10) unter der Steuern der Steuerung (10) anzeigt.

19. Drahtlose Kommunikationsvorrichtung nach einem der Ansprüche 1 bis 18, bei der die Einstellinformation mindestens einen eines Parameters, der einen Kommunikationsmodus darstellt, eines Parameters, der einen Netzwerkidentifizierer darstellt, und eines Parameters, der einen Verschlüsselungsschlüssel darstellt, enthält.

20. Verfahren des Einstellens einer drahtlosen Kommunikationsvorrichtung (1) mit einer Kommunikationsschnittstelle (27) und einer Radiosignalverarbeitungseinheit (21), **gekennzeichnet durch** das Aufweisen der Schritte:
Erkennen, ob eine Vorrichtung, die mit der Datenkommunikationsschnittstelle (37) verbunden ist, eine Speichervorrichtung (50) oder eine Bildvorrichtung (30) ist, gemäß einer Beschreibung, die in den von der Vorrichtung (30) erhaltenen Daten enthalten ist;
Tätigsein in einem drahtlosen Kommunikationsmodus zum:
(i) Durchlassen von Daten, die von der Bildvorrichtung (30) über die Datenkommunikationsschnittstelle (27) erhalten werden, zu der Radiosignalverarbeitungseinheit (21), und
(ii) Liefern von Daten von einem drahtlosen Signal zu der Bildvorrichtung (30) über die drahtlose Kommunikationsschnittstelle (27), wenn die Vorrichtung als eine Bildvorrichtung (30) erkannt wird;
Beurteilen, wenn die Vorrichtung als eine Speichervorrichtung (50) erkannt wird, ob Einstellinformation in der Speichervorrichtung (50) gespeichert ist und Erhalten unter Benutzung der Kommunikationsvorrichtung (1) der Einstellinformation von der Speichervorrichtung (50), wenn in dem Beurteilungsschritt beurteilt wird, dass die Einstellinformation in der Speichervorrichtung (50) gespeichert ist; und
Einstellen der drahtlosen Kommunikationsfunktion der drahtlosen Kommunikationsvorrichtung (1) unter Benutzung der Einstellinformation, die in dem Erhaltensschritt erhalten wird.

21. Computerlesbares Medium mit einem darauf gespeicherten Programm, das, wenn es auf einen Computer geladen wird und ausgeführt wird, bewirkt, dass der Computer als eine drahtlose Kommunikationsvorrichtung funktioniert, und zum Ausführen des Verfahrens von Anspruch 20 zum Einstellen der drahtlosen Kommunikationsvorrichtung.

22. System zum Einstellen einer drahtlosen Kommunikationsvorrichtung (1) mit einer Kommunikationsschnittstelle (27) und einer Radiosignalverarbeitungseinheit (21), **gekennzeichnet durch**:
ein Mittel (10) zum Erkennen, ob eine Vorrichtung, die mit der Datenkommunikationsschnittstelle (27) verbunden ist, eine Speichervorrichtung (50) oder eine Bildvorrichtung (30) ist gemäß einer Beschreibung, die in Daten enthalten ist, die von der Bildvorrichtung (30) erhalten sind;
ein Mittel zum Tätigsein in einem drahtlosen Kommunikationsmodus zum:
(i) Durchlassen von Daten, die von der Bildvorrichtung (30) über die Datenkommunikationsschnittstelle (27) erhalten sind, zu der Radiosignalverarbeitungseinheit (21), und
(ii) Liefern der Daten von einem drahtlosen Signal zu der Bildvorrichtung (30) über die Datenkommunikationsschnittstelle (27), wenn die Vorrichtung als eine Bildvorrichtung (30) erkannt ist;
einem Mittel (10) zum Beurteilen, wenn die Vorrichtung als die Speichervorrichtung (50) erkannt ist, ob Einstellinformation in der Speichervorrichtung (50) gespeichert ist, und zum Erhalten der Einstellinformation von der Speichervorrichtung (50), wenn **durch** das Beurteilungsmittel beurteilt wird, dass die Einstellinformation in der Speichervorrichtung (50) gespeichert ist; und
einem Mittel (10) zum Einstellen der drahtlosen Kommunikationsfunktion mit der drahtlosen Kommunikationsvorrichtung (1) unter Benutzung der Einstellinformation, die in dem Erhaltenmittel erhalten ist.

## Revendications

1. Dispositif de communication sans fil (1) comprenant :
une unité de traitement de signal radio (21) agencée pour transmettre et recevoir des signaux radio ;
une interface de communication de données (27) à laquelle un dispositif (30/50) peut être connecté de manière détachable ; et
un contrôleur (10) agencé pour :
commander l'unité de traitement de signal radio (21) et l'interface de communication de données (27) ; et
fonctionner pour configurer une fonction de communication sans fil du dispositif de communication sans fil (1), **caractérisé en ce que** le contrôleur (10) est en outre agencé pour :
reconnaître, lorsque le dispositif (30/50) est connecté à l'interface de communication de données (27), si le dispositif connecté est un dispositif de stockage (50) ou un dispositif d'imagerie (30) en fonction d'un descripteur contenu dans les données obtenues du dispositif (30/50) ;
si le dispositif est reconnu en tant que dispositif d'imagerie (30), commander le dispositif de communication sans fil (1) de manière à utiliser la fonction de communication sans fil pour (i) passer des données, obtenues du dispositif d'imagerie (30) par le biais de l'interface de communication de données (27), à l'unité de traitement de signal radio (21), et (ii) fournir des données d'un signal sans fil au dispositif d'imagerie (30) par le biais de l'interface de communication de données (27) ; et
si le dispositif est reconnu en tant que dispositif de stockage (50), pouvoir obtenir des informations de réglage du dispositif de stockage (50) par le biais de l'interface de communication de données (27) et configurer la fonction de communication sans fil du dispositif de communication sans fil (1) en fonction des informations de réglage obtenues.

2. Dispositif de communication sans fil (1) selon la revendication 1, dans lequel le contrôleur (10) est en outre agencé pour utiliser les informations de réglage obtenues pour configurer des paramètres de fonctionnement sans fil du dispositif de communication sans fil (1).

3. Dispositif de communication sans fil (1) selon la revendication 1 ou 2, dans lequel le contrôleur (10) est agencé pour reconnaître le type de dispositif (30/50) connecté à l'interface de communication de données (27) en tant que dispositif d'imagerie (30) si le dispositif (30/50) est un dispositif multifonctionnel et/ou une imprimante et/ou un scanner.

4. Dispositif de communication sans fil (1) selon la revendication 1, dans lequel le contrôleur (10) est agencé pour recevoir un signal et juger s'il faut obtenir les informations de réglage du dispositif de stockage (50), lorsqu'il est connecté au dispositif de communication de données (1), en fonction du signal reçu.

5. Dispositif de communication sans fil selon la revendication 4, dans lequel la réception du signal découle de la connexion du dispositif de stockage (50) à l'interface de communication de données (27).

6. Dispositif de communication sans fil selon la revendication 4 ou 5, dans lequel le signal est obtenu par le contrôleur (10) par le biais de l'interface de communication de données (27) sous forme de données.

7. Dispositif de communication sans fil selon la revendication 1, dans lequel le signal obtenu par le contrôleur (10) comprend des données représentant le type du dispositif (30/50) connecté à l'interface de communication de données (27).

8. Dispositif de communication sans fil selon la revendication 1, dans lequel le contrôleur (10) est agencé pour recevoir un signal et juger s'il faut utiliser la fonction de communication sans fil du dispositif de communication sans fil (1) en fonction du signal reçu.

9. Dispositif de communication sans fil selon la revendication 8, dans lequel la réception du signal découle de la connexion du dispositif d'imagerie (30) à l'interface de communication de données (27).

10. Dispositif de communication sans fil selon la revendication 8 ou 9, dans lequel le signal est obtenu par le contrôleur (10) par le biais de l'interface de communication de données (27) sous forme de données.

11. Dispositif de communication sans fil selon l'une quelconque des revendications 8 à 10, dans lequel le signal obtenu par le contrôleur (10) comprend des données représentant le type du dispositif (30/50) connecté à l'interface de communication de données (27).

12. Dispositif de communication sans fil selon la revendication 1, dans lequel le contrôleur (10) fonctionne en outre pour permettre à un dispositif (5), connecté au dispositif de communication sans fil (1) par le biais de l'unité de traitement de signal radio (21), d'utiliser un dispositif d'imagerie (30), lorsqu'il est connecté à l'interface de communication de données (27), par le biais de l'unité de traitement de signal radio (21) et de l'interface de communication de données.

13. Dispositif de communication sans fil (1) selon la revendication 12, dans lequel :
le dispositif d'imagerie (30) qui peut être connecté de manière détachable à l'interface de communication de données (27) comprend un dispositif d'enregistrement d'image ayant une fonction d'enregistrement d'image ; et
le contrôleur (10) est en outre agencé pour recevoir des données d'image du dispositif (5) connecté au dispositif de communication sans fil (1) par le biais de l'unité de traitement de signal radio (21) et pour transmettre les données d'image reçues au dispositif d'enregistrement d'image par le biais de l'interface de communication de données (27) de sorte que le dispositif (5) connecté au dispositif de communication sans fil (1) par le biais de l'unité de traitement de signal radio (21) puisse utiliser la fonction d'enregistrement d'image du dispositif d'enregistrement d'image.

14. Dispositif de communication sans fil (1) selon la revendication 12, dans lequel :
le dispositif d'imagerie (30) qui peut être connecté de manière détachable à l'interface de communication de données (27) comprend un dispositif d'imagerie ayant une fonction de génération de données d'image ; et
le contrôleur (10) fonctionne pour recevoir des données d'image du dispositif d'imagerie par le biais de l'interface de communication de données (27) et pour transmettre les données d'image reçues au dispositif (5) connecté au dispositif de communication sans fil par le biais de l'unité de traitement de signal radio (21) de sorte que le dispositif (5) connecté au dispositif de communication sans fil (1) par le biais de l'unité de traitement de signal radio (21) puisse utiliser la fonction de génération de données d'image du dispositif d'imagerie.

15. Dispositif de communication sans fil (1) selon l'une quelconque des revendications 1 à 14, dans lequel le contrôleur (10) est en outre agencé pour obtenir un certificat électronique du dispositif de stockage (50) contenant les informations de réglage si le dispositif de stockage (50) est connecté à l'interface de communication de données (27), de sorte que le certificat électronique soit utilisé dans la fonction de communication sans fil.

16. Dispositif de communication sans fil (1) selon l'une quelconque des revendications 1 à 15, dans lequel le contrôleur (10) est en outre agencé pour obtenir des microprogrammes du dispositif de communication sans fil (1) à partir du dispositif de stockage (50) contenant les informations de réglage si le dispositif de stockage (50) est connecté à l'interface de communication de données (27), de sorte que la fonction de communication sans fil puisse être mise à jour par les microprogrammes obtenus.

17. Dispositif de communication sans fil selon l'une quelconque des revendications 1 à 16, dans lequel si le dispositif de stockage (50) contenant les informations de réglage est connecté à l'interface de communication de données (27) et a des microprogrammes du dispositif de communication sans fil (1) en plus des informations de réglage, le contrôleur (10) est en outre configuré pour exécuter une opération de mise à jour de microprogrammes pour mettre à jour la fonction de communication sans fil par les microprogrammes séquentiellement dans un ordre prédéterminé de préséance.

18. Dispositif de communication sans fil selon l'une quelconque des revendications 1 à 17, comprenant en outre une unité d'affichage (25) qui affiche un statut d'une condition de fonctionnement du contrôleur (10) sous le contrôle du contrôleur (10).

19. Dispositif de communication sans fil selon l'une quelconque des revendications 1 à 18, dans lequel les informations de réglage comprennent au moins l'un d'un paramètre représentant un mode de communication, d'un paramètre représentant un identifiant de réseau, et d'un paramètre représentant une clé de cryptage.

20. Procédé de configuration d'un dispositif de communication sans fil (1), comprenant une interface de communication (27) et une unité de traitement de signal radio (21) **caractérisé en ce qu'**il comprend les étapes consistant à :
reconnaître si un dispositif connecté à l'interface de communication de données (37) est un dispositif de stockage (50) ou un dispositif d'imagerie (30) en fonction d'un descripteur contenu dans les données obtenues du dispositif (30) ;
fonctionner dans un mode de communication sans fil pour (i) passer des données, obtenues du dispositif d'imagerie (30) par le biais de l'interface de communication de données (27), à l'unité de traitement de signal radio (21), et (ii) fournir des données d'un signal sans fil au dispositif d'imagerie (30) par le biais de l'interface de communication de données (27) si le dispositif est reconnu en tant que dispositif (30) ;
juger, si le dispositif est reconnu en tant que dispositif de stockage (50), si des informations de réglage sont stockées dans le dispositif de stockage (50), et obtenir, en utilisant le dispositif de communication sans fil (1), les informations de réglage du dispositif de stockage (50) s'il est jugé à l'étape de jugement que les informations de réglage sont stockées dans le dispositif de stockage (50) ; et
configurer la fonction de communication sans fil du dispositif de communication sans fil (1) en utilisant les informations de réglage obtenues à l'étape d'obtention.

21. Support lisible par ordinateur ayant un programme stocké sur celui-ci qui, lorsqu'il est chargé sur un ordinateur et exécuté, amène l'ordinateur à fonctionner en tant que dispositif de communication sans fil, et à effectuer le procédé de la revendication 20 consistant à configurer le dispositif de communication sans fil.

22. Système pour configurer un dispositif de communication sans fil (1), comprenant une interface de communication (27) et une unité de traitement de signal radio (21), **caractérisé en ce qu'**il comprend :
un moyen (10) pour reconnaître si un dispositif connecté à l'interface de communication de données (37) est un dispositif de stockage (50) ou un dispositif d'imagerie (30) en fonction d'un descripteur contenu dans les données obtenues du dispositif d'imagerie (30) ;
un moyen pour fonctionner dans un mode de communication sans fil pour (i) passer des données, obtenues du dispositif d'imagerie (30) par le biais de l'interface de communication de données (27), à l'unité de traitement de signal radio (21), et (ii) fournir des données d'un signal sans fil au dispositif d'imagerie (30) par le biais de l'interface de communication de données (27) si le dispositif est reconnu en tant que dispositif d'imagerie (30) ;
un moyen (10) pour juger, si le dispositif est reconnu en tant que dispositif de stockage (50), si des informations de réglage sont stockées dans le dispositif de stockage (50), et obtenir les informations de réglage du dispositif de stockage (50) s'il est jugé par le moyen de jugement que les informations de réglage sont stockées dans le dispositif de stockage (50) ; et
un moyen (10) pour configurer la fonction de communication sans fil du dispositif de communication sans fil (1) en utilisant les informations de réglage obtenues par le moyen d'obtention.
